Europäisches Patentamt

(19) European Patent Office

Office européen des brevets

(11) Publication number: **0 066 329**
**B1**

(12) **EUROPEAN PATENT SPECIFICATION**

(45) Date of publication of patent specification: **09.09.87**

(21) Application number: **82200608.6**

(22) Date of filing: **18.05.82**

(51) Int. Cl.⁴: **G 01 T 1/164**

(54) Apparatus comprising a manually exchangeable element.

(30) Priority: **21.05.81 NL 8102498**

(43) Date of publication of application:
**08.12.82 Bulletin 82/49**

(45) Publication of the grant of the patent:
**09.09.87 Bulletin 87/37**

(84) Designated Contracting States:
**DE FR GB NL SE**

(56) References cited:
**US-A-3 704 907**

**JOURNAL OF NUCLEAR MEDICINE, vol. 16, no.12, Dece mber 1975, pages 1195-1196, Amsterdam, NL. H. MALAMUD et al.: "Simple and efficient system for fast interchange of low-engergy collimators"**

(73) Proprietor: **N.V. Philips' Gloeilampenfabrieken**
**Groenewoudseweg 1**
**NL-5621 BA Eindhoven (NL)**

(72) Inventor: **Span, Francis Johannes**
**INT. OCTROOIBUREAU B.V. Prof. Holstlaan 6**
**NL-5656 AA Eindhoven (NL)**
Inventor: **Boland, Aloysius Theodorus Maria**
**INT. OCTROOIBUREAU B.V. Prof. Holstlaan 6**
**NL-5656 AA Eindhoven (NL)**
Inventor: **Van Laarhoven, Albertus Johannes**
**A.J.**
**INT. OCTROOIBUREAU B.V. Prof. Holstlaan 6**
**NL-5656 AA Eindhoven (NL)**

(74) Representative: **Scheele, Edial François et al**
**INTERNATIONAAL OCTROOIBUREAU B.V. Prof.**
**Holstlaan 6**
**NL-5656 AA Eindhoven (NL)**

## Description

The invention relates to an apparatus comprising a clamping mechanism as defined in the preamble of the claim.

An exchangeable collimator of this kind is liable to be comparatively heavy and must be coupled to the gamma camera for example, by manual manipulation. In such a case it is often advantageous if first a comparatively loose connection can be made, so that at least the element cannot fall off. To this end, the coupling mechanism often comprises a bayonet coupling. A slight rotation of the collimator with respect to the camera is usually sufficient to establish the loose connection. Known apparatus such as disclosed in an article in Journal of Nuclear Medicine Vol. 16, No. 12, December 1975, pages 1195—1196, often comprise a clamping mechanism with a clamping force which acts against the rotation and the collimator is assumed to be adequately secured in the correct position thereby. This arrangement has several drawbacks. For example, a comparatively large torque is exerted on the gamma camera, there usually is no certainty that the collimator has been rotated far enough, and the collimator could shake loose during operation and even fall off the camera. A snap-type clamping mechanism which is activated after sufficient rotation of the collimator can prevent the collimator shaking loose but does not prevent excessive torques and does not always ensure with certainty that the collimator has been rotated far enough. Similar undesirable torques occur again, of course, when the collimator is removed.

It is an object of the invention to mitigate these drawbacks. To this end a clamping mechanism of the kind set forth in the first paragraph is constructed as defined in the characterizing part of the claim.

With this clamping mechanism it is not necessary to exert a large torque, because the collimator may remain comparatively loosely attached to the camera until the coupling is engaged. The risk of the element not being rotated far is thus substantially reduced. When the clamping mechanism is provided with means which allow the hand grip to be pivoted down only in the engaged position of, for example, a bayonet coupling insufficient rotation is fully precluded and a visual check of the correct orientation of the hand grips is possible. For example, by releasing a spring force in the bayonet coupling when the grip is pivoted down, a clamping coupling is obtained in the correct position.

The hand grip in a preferred embodiment comprises at least one preferably slightly conical guide pin or bore, and the apparatus comprises a matching bore or guide pin. The clamping effect is produced in a preferred embodiment by a leaf spring which is secured to the apparatus and which ensures that the coupling clamps firmly when the hand grip is pivoted down.

The clamping mechansim of a preferred embodiment comprises two symmetrically arranged pivotable hand grips which lie in planes extending transversely of a coupling surface of the apparatus in the erected position and which lie in planes parallel to said surface in the pivoted down position.

The element can be coupled in two axial orientation in a further preferred embodiment because each of the grips has a symmetrical construction. This embodiment is attractive, especially for coupling a collimator to a gamma camera. Such collimators are sometimes of a focusing type, which means that the channels of the collimator are all directed onto one point or line. the coupling mechanism enables such a collimator to be fitted so that it has either a converging or a diverging effect.

Some preferred embodiments of the invention will be described in detail hereinafter. In the drawings:

Figure 1 shows a clamping device for a gamma camera in accordance with the invention, and

Figure 2 shows a gamma camera in accordance with the invention.

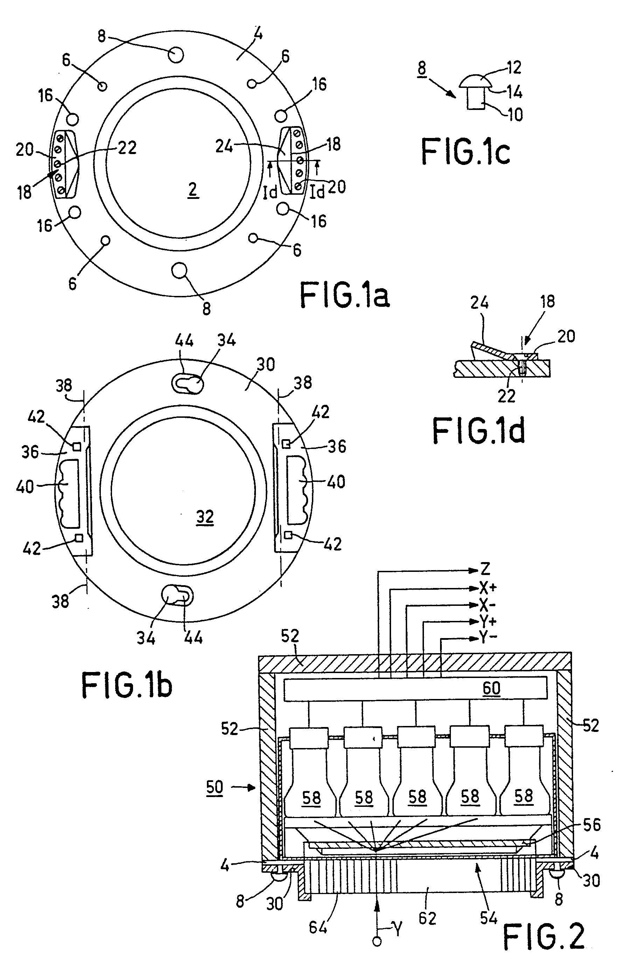

Figure 1 shows a clamping device in accordance with the invention which comprises an opening 2, for admitting radiation to be measured to the camera, an annular coupling plate 4 with guides 6, and two pins 8 whose profile is shown in Figure 1c and which each comprise a cylindrical portion 10 and a head 12 with an abutment face 14. The coupling plate furthermore comprises four bores 16 and two leaf springs 18, a flat section 20 of each spring being secured to the coupling plate by means of screws 22, whilst a resilient portion 24 of the spring extends obliquely from the coupling plate.

A coupling spring 30 which is to be secured to the coupling plate and which comprises an opening 32 in which a collimator can be mounted, also comprises two keyhole slots 34 which are adapted to the dimensions of the pins 8 to form therewith a bayonet coupling 9 and two folding handgrips 36. The grips are pivotable about axes 38 and comprise openings 40 to receive the operator's hands, and cams 42 which are cooperable with the bores 16. When the ring 30 is being transported, the grips lie in planes which extend transversely of the plane of the ring. For coupling, the ring to the coupling plate the ring is connected to the coupling plate by means of the bayonet coupling and is rotated to the stop position shown. The ring, with an element mounted therein, is then suspended from the apparatus but can still be readily moved. Portions 44 of the ring assume a clamping position against the abutment faces 14 of the pins 8 only when the grips are folded down, thus effecting the coupling. The ring can be simply removed again by pivoting the grips. As is shown in the Figure, preferably the grips comprise cams 42 on the lower side as well as on the upper side and can be pivoted out of the plane of the ring on both sides. They preferably drop into the folded position with a strong action or can be locked therein.

A gamma camera as shown in Figure 2 comprises a housing 50 with comparatively thick radiation walls 52 and an entrance opening 54 for admitting gamma quanta to be measured to a scintillation crystal 56. The housing accommodates a matrix of photomultiplier tubes 58 and a first signal processing device 60. A gamma camera of this kind is described, for example, in US—PS 4,079,257 and is used for the localized measurement of gamma quanta to be emitted by a patient. In order to permit localization of the gamma quanta sources in the body to be examined, a camera of this kind is equipped with a collimator 62. Such a collimator, actually consisting of a block of lead comprising numerous channels 64, is comparatively heavy (for example, 10 kg) and must be capable of being easily positioned and coupled to the gamma camera. Usually different types of collimator are used for different types of examination. In accordance with the invention, the housing 50 comprises a coupling plate 4 with pins 8 and springs 18 (not shown). The collimator is accommodated in a coupling ring 30 of the construction described. The grips of the coupling ring, which are not visible in Figure 2, are oriented in the direction of the channels 64 in the non-fixed position, so that the collimator can be easily carried. Also, it is not possible to see directly whether the grips are folded down or not, and hence whether or not the collimator has been secured and locked. Similar, comparatively heavy elements which have to be exchanged by hand are, for example, diaphragms for radiation apparatus, scatter grids for, for example, X-ray diagnostic apparatus, adaptation lenses for large optical systems and valves.

## Claim

A clamping mechanism for coupling an exchangeable collimator to a gamma camera with hand-grippable coupling means which can only be coupled in a predetermined angular orientation of the gamma camera and the collimator with respect to one another, characterized in that the coupling means comprises two hand grips (36) mounted symmetrically to one another on either side of the collimator coupling plate (30) which hand grips are pivotable into a locked position, against the action of a resilient member (24), working in a direction non coincident with a coupling plane (14) between the gamma camera and the collimator, only in said predetermined orientation of the camera and the collimator.

## Patentanspruch

Klemmvorrichtung zum Verbinden eines austauschbaren Kollimators mit einer Gammakamera mit von Hand bedienbaren Verbindungsmitteln, die nur einer vorgegebenen Winkelorientierung der Gammakamera und des Kollimators in bezug aufeinander verbunden werden können, dadurch gekennzeichnet, dass die Verbindungsmittel zwei Handgriffe (36) enthalten, die in bezug aufeinander an beiden Seiten der Kollimatorverbindungsplatte (30) symmetrisch angebracht sind und in eine Verriegelungsposition gegen der Wirkung eines federnden Elements (24), das in eine nicht· mit einer Verbindungsebene (14) zwischen der Gammakamera und dem Kollimator zusammenfallenden Richtung arbeitet, und nur in der genannten vorgegebenen Orientierung der Kamera und des Kollimators gedreht werden können.

## Revendication

Mécanisme de serrage pour fixer un collimateur échangeable à une· gamma-caméra comportant un dispositif de fixation agrippable qui ne peut être fixé que dans une orientation angulaire relative prédéterminée de la gamma-caméra et du collimateur, caractérisé en ce que le dispositif de fixation comprend deux poignées (36) montées symétriquement l'une par rapport à l'autre de part et d'autre du plateau de fixation (30) du collimateur, ces poignées pouvant pivoter dans une position de blocage, à l'encontre de la sollicitation d'un élément élastique (24) travaillant dans un sens qui ne coïncide pas avec un plan de fixation (14) entre la gamma-caméra et le collimateur, et ce uniquement dans la dite orientation prédéterminée de la caméra et du collimateur.

FIG.1c

FIG.1a

FIG.1d

FIG.1b

FIG.2

1